# EUROPEAN PATENT APPLICATION

(11) **EP 1 884 894 A1**
(43) Date of publication of application: **06.02.2008**
(21) Application number: 07252574.4
(22) Date of filing: 25.06.2007
(51) Int. Cl.: G06T 7/00, G06T 5/00, G06T 17/40

(54) **Electronic subtraction of colonic fluid and rectal tube in computed colonography**

(30) Priority: 31.07.2006 US 496351
(71) Applicant: iCad, Inc., Beavercreek, Ohio 45431 (US)
(72) Inventor: Mc Ginnis, Ryan, Tipp City, Ohio 45371 (US)
(74) Representative: Cummings, Sean Patrick

(57) **Abstract**

A method and system for the use of a CAD algorithm that can be used to automatically detect retained colonic fluid and the rectal tube in computed tomographic (CT) imagery of a patient's colon is disclosed. The CAD algorithm can then electronically subtract the fluid and rectal tube from the images and the modified CT imagery can then be displayed to a user, such as a radiologist. Both the original and modified CT imagery will be stored for future presentation and review. The user, including the radiologist or other medical personnel, will have the option to toggle between displaying and reviewing the modified and original imagery. After subtraction, the radiologist will be able to view the imagery containing all pertinent information regarding the colonic lumen and any suspect region within the colon. Additionally, full processing of the scan is possible even when fluid retention in the colon is greater than fifty percent in any region.

## Description

### BACKGROUND OF THE INVENTION

The present invention generally relates to a method and system for processing colon medical image data and, in particular, relates to a method and system for processing colon medical image data in which residual colonic fluid and a rectal tube are electronically subtracted from colon imagery.

Currently, colorectal cancer is the second leading cancer killer in the United States. For men, colorectal cancer is the third most common cancer after prostate cancer and lung cancer. For women, colorectal cancer is the third most common cancer after breast cancer and lung cancer. In 2002, 70,651 men and 68,883 women were diagnosed with colorectal cancer and 28,471 men and 28,132 women ended up dying from the disease.

Colorectal cancer in early stages is often asymptomatic. The best way to prevent colorectal cancer is through regular screening. Screening tests for colorectal cancer can find precancerous polyps so that the polyps can be removed. When colorectal cancer is detected early and treated, the five-year relative survival rate is ninety percent. However, because screening rates are low, less than forty percent of colorectal cancers are detected early.

One recently developed screening format utilizes computed tomographic colonography (CTC), also referred to as virtual colonoscopy. CTC utilizes multiple two-dimensional computed tomographic (CT) images from a patient's colon to create a three-dimensional representation. As with traditional colonoscopy, a patient must prepare for CTC by drinking a strong laxative to thoroughly cleanse the colon.

However, even after the patient cleanses the colon, fluid retention remains an inherent problem in analyzing CTC imagery. One attempt to mitigate this problem is scanning the patient in both supine and prone positions in order for the radiologist to be able to review the entire colonic lumen. This method is insufficient in sections where the fluid retention is greater than fifty percent. If fluid retention is greater than fifty percent, the radiologist will be unable to detect suspicious regions in the CT imagery within this fluid-filled region.

In order to facilitate the removal of the colonic fluid, one solution is to develop a computed-aided detection (CAD) algorithm to explicitly segment the tagged fluid when processing the CT imagery. After segmentation of the colonic fluid, the radiologist can then be presented with new imagery that contains all of the pertinent information regarding the colonic lumen. This includes the ileocecal valve, haustral folds, and other colonic structures as well as any suspect regions including potential polyps that were not visible before the fluid was removed. Having the CAD algorithm subtract the colonic fluid from the CT imagery allows for full processing of the scan even when fluid retention may be greater than fifty percent in any region of the colon.

There is a need for radiologists to be able to view and diagnose an entire colon scan even in regions where colonic fluid retention may be greater than fifty percent (i.e., the regions of the colon scan that previously could not be fully inspected due to the fluid retention). There is also the need for suspicious regions that were detected in one view but previously hidden in another due to residual colonic fluid to be examined fully by the radiologist in both views. Further, another need exists to eliminate the effects of the fluid/air boundary as a source of false-positives in the examination of CTC scans.

In addition, another major source of false-positive reports in CTC is the rectal tube. Typically, the rectal tube is located within the patient's rectum and often has positive contrast to surrounding tissue and relatively consistent cross-sectional area. This results in the rectal tube often incorrectly being labeled as a suspect region. Therefore, there is an additional need for the CAD algorithm to explicitly segment and electronically remove the rectal tube from the presented CT imagery.

### BRIEF SUMMARY OF THE INVENTION

According to the present invention, a CAD algorithm can be used to automatically detect retained colonic fluid and the rectal tube in the CTC imagery of a patient's colon. The CAD algorithm can then electronically subtract the residual colonic fluid and rectal tube from the images. The modified CT imagery can then be displayed to a user, such as a radiologist. Both the original and modified CT imagery will be stored for future presentation and review. Additionally, the radiologist, will have the option to toggle between displaying and reviewing the modified and original CT imagery.

In accordance with one embodiment of the present invention, the radiologist will be able to view the CT imagery containing all pertinent information regarding the colonic lumen and any suspect regions of the colon without the retained colonic fluid and the rectal tube being present in the CT imagery.

In accordance with another embodiment of the present invention, full processing of the CT scan is possible even when colonic fluid retention in the colon is greater than fifty percent in any region of the colon.

Accordingly, it is a feature of the embodiments of the present invention to electronically subtract residual colonic fluid and rectal tube during the processing of a patient's CTC in order for the radiologist to review the entire colonic lumen.

Other features of the embodiments of the present invention will be apparent in light of the description of the invention embodied herein.

### BRIEF DESCRIPTION OF THE SEVERAL VIEWS OF THE DRAWINGS

The following detailed description of specific embodiments of the present invention can be best understood when read in conjunction with the following drawings, where like structure is indicated with like reference numerals and in which:
Figure 1 is a block diagram illustrating the general overview of the system according to an embodiment of the present invention.
Figure 2 is a block diagram illustrating the CAD algorithm for electronically cleansing residual colonic fluid from the CTC imagery according to an embodiment of the present invention.

### DETAILED DESCRIPTION

In the following detailed description of the embodiments, reference is made to the accompanying drawings that form a part hereof, and in which are shown by way of illustration, and not by way of limitation, specific embodiments in which the invention may be practiced. It is to be understood that other embodiments may be utilized and that logical, mechanical and electrical changes may be made without departing from the spirit and scope of the present invention.

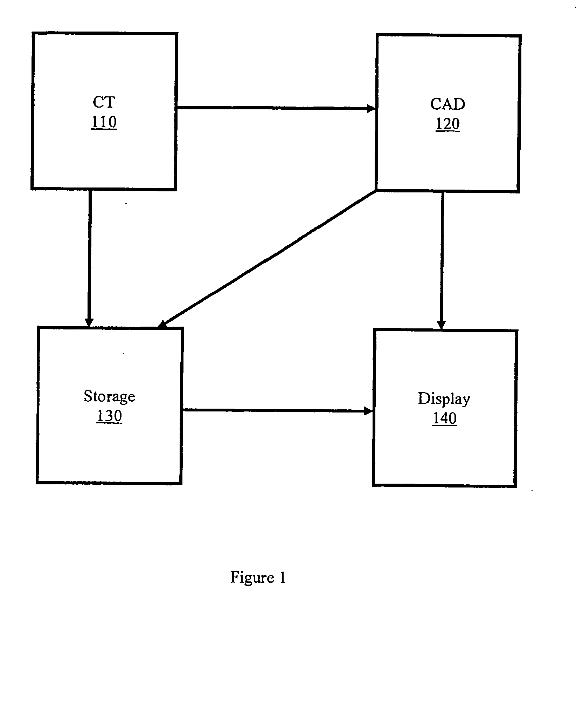

Referring initially to Figure 1, a block diagram of the general overview of the system, a CT scan 110 is initially taken of a patient's colon. The CT imagery 110 is then passed to the CAD program resident on, for example, a workstation, where the imagery is processed by a CAD algorithm 120. At the same time, the original CT imagery 110 is passed unaltered to a memory storage device 130. The memory storage device 130 can be, for example, a database, a computer hard drive, a zip drive or any other method of storing CT images known in the art. The CAD algorithm 120 will search the CT imagery 110 for colonic air, retained colonic fluid, rectal tube structure, and suspect regions. The CAD algorithm 120 will then electronically subtract the colonic fluid and rectal tube from the CT imagery 110.

The output from the CAD algorithm 120 can then be presented 140 on a display such as, for example, an electronic monitor as CTC imagery 110 with both the colonic fluid and rectal tube removed. This new modified CT imagery 110 will also be stored in the memory storage device 130. A user, such as a radiologist or other medical personnel, will then have access to both the modified imagery from the CAD algorithm 120 as well as the original CT imagery 110 without the electronic subtraction from the memory storage device 130. The user then has the option of toggling between the presentation 140 of the two CT imageries on the display.

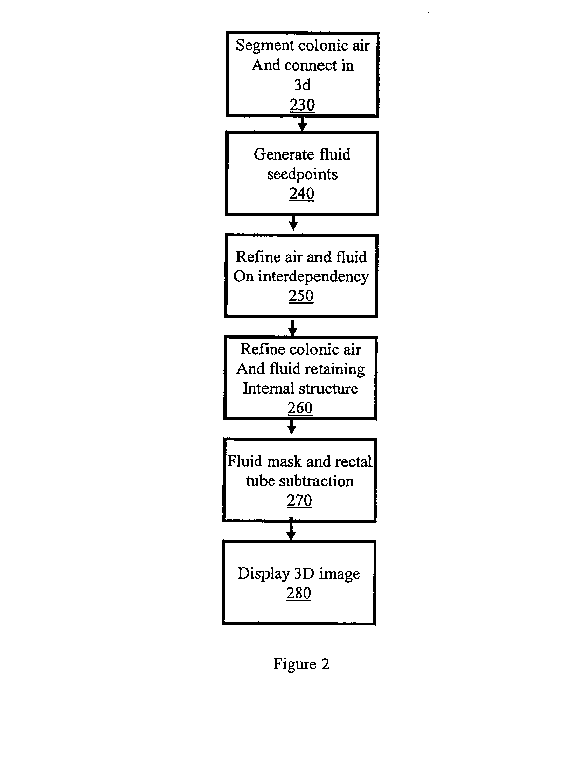

Figure 2 is a block diagram illustrating the steps used by the CAD algorithm for electronically cleansing colonic fluid from the colon CT imagery. In step 230 of Figure 2, the CAD algorithm will search the obtained CT imagery for colonic air seedpoints. These seedpoints will then be connected in three dimensions to generate a mask of the entire colonic fluid with steps taken to remove extracolonic regions such as small bowel, stomach, and other outside objects. In step 240 of Figure 2, seedpoints for the residual fluid based on the colonic air will then be generated. This is accomplished through both lines drawn to connect separated regions of colonic air as well as regions of potential fluid intersected by dilated sections of colonic air on all slices. In step 250 of Figure 2, interdependency between the colonic air and retained fluid is evaluated by performing a slice by slice dilation on the colonic air to generate additional fluid seedpoints. These seedpoints are then connected in three dimensions. When this is complete, the same process is performed to refine the colonic air involving dilating each slice of fluid and finding potential air objects that intersect the mask. These seedpoints are then connected in three dimensions. One more refinement is then performed for the fluid by dilating each slice of the colonic air and finding fluid seedpoints. These seedpoints are then connected in three dimensions. Steps are taken to remove any extracolonic objects including small bowel, stomach, and other outside objects.

In step 260, the colonic air and fluid masks of the CT imagery will then be merged to form a three-dimensional representation of the patient's colon by performing a two-dimensional analysis of the high resolution CTC imagery. The colonic air mask is resampled and smoothed to the full resolution border of the colonic lumen by appending objects that are less than approximately -300 Hounsfield Units (HU) and intersected by the dilated colonic air slice. Steps are taken to ensure that extracolonic objects are not appended including the lungs. Next the fluid mask is resampled and evaluated to ensure objects of interest are maintained. Haustral fold structures are maintained by removing objects that are less than approximately 200 HU and contained inside the convex hull mask of the fluid mask perimeter. Objects that are greater than approximately 200 HU and are intersected by the dilated fluid mask are appended into the fluid mask.

The air/fluid boundary is then evaluated in an attempt to remove noise associated with this region. This is accomplished by first median filtering to remove image artifacts. Next, a gradient is evaluated and those edges with response whose magnitude is sufficiently high are considered valid edges and are appended into the fluid mask. Next any noise in the full resolution mask, defined as objects with a row projection less than approximately three, is appended into the fluid mask.

The colonic fluid will then be electronically subtracted by the CAD algorithm in step 270 by re-randomizing the imagery corresponding to the colonic fluid to simulate colonic air. All regions of interest to the radiologist, or other medical personnel, will remain including, for example, the colonic lumen, folds, and suspect polyps. This is accomplished by performing a slice by slice calculation of the statistics, including mean and standard deviation, of the colonic air for the current CT slice. If no colonic air is present in the current CT slice, the statistics are assumed that the mean is approximately -850 HU and the standard deviation is 50. For each slice, all pixels in the colonic fluid mask on that slice are assigned a normally distributed random number from the calculated distribution. A seeded random number generator is used to enforce system predictability.

In step 270, the CAD algorithm will then explicitly segment and electronically cleanse the rectal tube from the CT imagery. The rectal tube segmentation will search for objects with positive contrast to surrounding tissue and a relatively consistent cross-sectional area through the CTC slices that are contained in and adjacent to the rectum mask. Determination of the rectum mask is part of the colonic air seedpoint generation process that was discussed above. If such an object is found, three dimensional growth will be evaluated and electronic subtraction will be performed on a slice by slice basis in a manner similar to the removal of the colonic fluid as described above. This is comprised of assigning random values from a normal distribution to the pixels associated with the rectal tube. The normal distribution is evaluated from the colonic air values on that slice or default values if no colonic air is present. Removing the rectal tube will result in lower false-positive CAD marks in the rectal tube region.

The processed CTC imagery with the colonic fluid and rectal tube removed that was produced by the CAD algorithm will then be presented and displayed to the radiologist so that the entire colon can be reviewed by the radiologist in step 280. The processed CTC imagery can be displayed on an electronic monitor or on any other method typically used for displaying CTC imagery known in the art. The processed CTC imagery is then stored in a memory storage device for later retrieval by the user or other medical personnel. The user or other medical personnel also has the option of reviewing the unprocessed CTC imagery originally stored in the memory storage device. In addition, the user or other medical personnel has also the option of toggling between displaying the processed and unprocessed CTC imagery in order to compare the CTC imagery.

It is noted that terms like "preferably," "commonly," "approximately", and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is understood that the present invention is not necessarily limited to these preferred aspects of the invention.

## Claims

1. A method for removing rectal tube and residual colonic fluid from colon medical image data, the system comprising:
obtaining computed tomography images of a colon;
storing the computed tomography images in a memory storage device;
processing the computed tomography images by a computer-aided detection algorithm to remove rectal tube and residual colonic fluid from the computed tomography images;
storing the processed computed tomography images in the memory storage device; and
displaying the processed and unprocessed computed tomography images for review.

2. The method of claim 1, wherein removing the residual colonic fluid comprises:
Searching for colonic air seedpoints
Connecting colonic air in three dimensions
Removing extracolonic objects such as small bowel, stomach, and other outside objects
Generation of fluid seedpoints through connecting air segments and through dilating colonic air slices
Slice by slice dilation of air and fluid masks and refining with seedpoints generated from intersection
Three dimensional refinement of colonic air and fluid due to interdependency
Removing extracolonic objects such as small bowel, stomach, and other outside objects
Merging of fluid and air masks to generate three dimensional colon mask
Resampling colonic air to full resolution and appending air objects to smooth mask
Resampling fluid mask, removing Haustral folds, appending fluid objects to smooth mask, and evaluating air/fluid boundary through gradient analysis and noise detection

3. The method of claim 1 or claim 2, wherein simulating colonic air comprising:
calculating statistics of the colonic air present in the current computed tomography image slice; and
substituting a normally distributed random number from the calculated statistics for all pixels located within the colonic fluid mask.

4. The method of claim 3, wherein the statistics of colonic air comprise mean, standard deviation and combinations thereof.

5. The method of claim 4, wherein when no colonic air is present in the current computed tomography image slice, the mean is assumed to be approximately -850 HU and the standard deviation to be approximately 50.

6. The method of claim 5, further comprising:
using a seeded random generator to obtain predictable results.

7. The method of any preceding claim, wherein the pertinent colon lumen information comprises information pertaining to folds, suspect polyps wall boundaries and combinations thereof.

8. The method of any preceding claim, wherein removing the rectal tube comprises:
searching the computed tomography images for objects with positive contrast and relatively consistent cross-sectional area representing the rectal tube within the colon mask and in particular searching for seedpoints within and adjacent to the rectum;
segmenting the rectal tube found in the CT imagery;
processing the rectal tube mask and extracting pertinent colonic lumen information; and
subtracting the rectal tube from the computed tomography images by re-randomizing the rectal tube region to simulate colonic air while retaining all the pertinent colonic lumen information.

9. The method of claim 8, wherein simulating colonic air comprises:
calculating statistics of the colonic air present in the current computed tomography image slice; and
substituting a normally distributed random number from the calculated statistics for all pixels located within the rectal tube mask.

10. The method of claim 9, wherein when no colonic air is present in the current computed tomography image slice, the mean is assumed to be approximately -850 HU and the standard deviation to be approximately 50.

11. The method of any of claims 8 to 10, further comprising:
using a seeded random generator to obtain predictable results.

12. The method of any preceding claim, further comprising:
retrieving the CT imagery from the memory storage device; and
displaying the CT imagery of the entire colon.

13. The method of any preceding claim, further comprising:
toggling between displaying the CT imagery from the memory storage device and displaying the processed CT imagery.

14. The method of claim 13, wherein toggling is performed by a user.

15. The method of any preceding claim, further comprising:
removing all extraneous regions from the computed tomography images.

16. The method of claim 15, wherein the extraneous regions comprise stomach, small bowel, outside objects and combinations thereof.

17. The method of any preceding claim, further comprising:
applying a median filter to the CT imagery to remove image;
finding edges by evaluating an image gradient for sufficiently high responses; and
determining valid boundaries between colonic air and colonic fluid are those edges that touch both colonic air and colonic fluid.

18. A method for removing rectal tube and residual colonic fluid from colon medical image data, the system comprising:
obtaining CT images of a colon;
storing the CT images in a memory storage device;
processing the CT images by a computer-aided detection algorithm to remove rectal tube and residual colonic fluid from the CT images by simulating colonic air in the CT images for the rectal tube and residual colonic fluid;
storing the processed CT images in the memory storage device; and
displaying the processed CT images representing the entire colon scan.

19. The method of claim 18, further comprising:
retrieving the CT images from the memory storage device; and
displaying the CT images of the entire colon.

20. The method of claim 19, further comprising:
toggling between displaying the CT images from the memory storage device and displaying the processed CT images.

21. A system for removing rectal tube and residual colonic fluid from colon medical image data, the system comprising:
a CT scanning machine to obtain CT images of a colon;
a computer-aided detection algorithm residing on a workstation to process the CT images and electronically subtract the rectal tube and any residual colonic fluid in the colon;
a memory storage device to store the processed and unprocessed CT images; and
a display to display both processed and unprocessed CT images to a user for review.

22. The system of claim 21, wherein the computer-aided detection algorithm substitutes colonic air in place of the rectal tube and the residual colonic fluid in the processed CT images.

23. The system of claim 21 or claim 22, wherein the user can toggle between displaying the processed and unprocessed CT images on the display.
